# EUROPÄISCHE PATENTANMELDUNG

(11) **EP 1 387 260 A1**
(43) Veröffentlichungstag der Anmeldung: **04.02.2004**
(21) Anmeldenummer: 02016349.9
(22) Anmeldetag: 25.07.2002
(51) Int. Cl.: G06F 9/44

(54) **Verfahren und Vorrichtung zur Erzeugung von Software**

(71) Anmelder: The Rationalizer Intelligent Software AG, 14167 Berlin (DE)
(72) Erfinder: Krug, Holger, 14167 Berlin (DE)

(57) **Zusammenfassung**

Die Erfindung betrifft ein Verfahren, ein softwaregesteuertes Gerät und eine Software zur Generierung von Code aus Modellen, die sich dadurch auszeichnen, dass die Modelle Instanzen von Meta-Modellen sind, für die eine oder mehrere Erweiterungen vorliegen, die die Modelle um berechnete Daten ergänzen und dass aus den so erweiterten Modellen mit Hilfe von Code-Schablonen Code, insbesondere Software-Code, generiert wird.

## Beschreibung

### 1. Technisches Gebiet

Die Erfindung gehört zum Gebiet der Verfahren und Vorrichtungen zur Softwareerstellung, genauer in das Gebiet der halb- und vollautomatischen Generierung von Software aus Modellen **(2)**. Eine Software, die in Zusammenhang mit einem Computer eine derartige Vorrichtung bildet, wird üblicherweise als CASE-Tool bezeichnet.

### 2. Stand der Technik

Stand der Technik für die Erzeugung von Software aus Modellen **(2)** ist ein 2stufiges Verfahren. In einer ersten Stufe werden Modelle **(2)** manuell erzeugt und modifiziert, in einer zweiten Stufe wird die zu generierende Software unter Verwendung von Code-Schablonen **(9)** aus den Modellen **(2)** erzeugt. Die Code-Schablonen **(9)** liegen dem Stand der Technik gemäß in Form von Dateien vor, die folgende Inhalte haben:
1. Referenzen auf andere Code-Schablonen enthaltende Dateien (import),
2. Aufbau von internen Datenstrukturen durch Modellzugriffe,
3. Anweisungen an der Generator zur Steuerung der Codegenerierung (Kommunikation mit dem Betriebssystem, Gliederung des Generierungscodes in einzelne Prozeduren, bedingte Anweisungen und Schleifen **(22)**),
4. Referenzen auf Modellelemente und Ausdrücke zur Berechnung von Daten aus dem Modell **(2)**,
5. Code **(26,28)**, der ungeändert in den zu generierenden Code **(11)** zu übernehmen ist.

Ein Generierungslauf besteht darin, dass ein Codegenerator **(13)** die Code-Schablonen **(9)** einliest, Verbindung mit dem Modell ausnimmt und die Code-Schablonen **(9)** auswertet, dabei den Code **(11)** generierend. In den Code-Schablonen **(9)** enthaltene Referenzen auf Modellelemente werden über die Verbindung auf das Modell **(2)** aufgelöst.

Das genannte Verfahren wird realisiert in dem Produkt *Software through Pictures* (Marke) der Firma *Aonix* (Marke) und in geringerem Umfang auch in anderen am Markt erhältliche Case-Tools mit Code-Generatoren **(13)**.

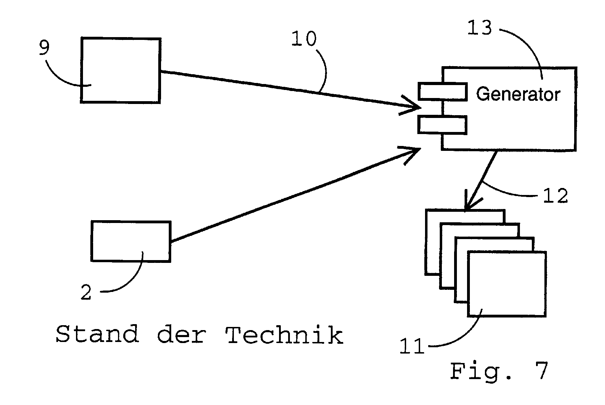

Fig. 7 zeigt den dargestellten Generierungsablauf gemäß dem Stand der Technik. Ein Code-Generator **(13)** liest eine Code-Schablone **(9)** über einen Kanal **(10)** und führt die Anweisungen der Code-Schablone **(9)** zur Generierung von Code **(11)** auf. Der Code-Generator **(13)** hat dabei Zugriff auf ein Modell **(2)**, wodurch er in der Lage ist, alle in der Code-Schablone **(9)** enthaltene Referenzen auf das Modell **(2)** aufzulösen und den Code **(11)** gemäß dem Inhalt des Modells **(2)** zu generieren.

### 3. Der Erfindung zugrundeliegendes Problem

Code-Generatoren **(13)** gemäß dem Stand der Technik sind geeignet, oft in gleicher Weise oder mit nur geringen Änderungen wiederkehrende Generationsaufgaben abzudecken. Bei der Nutzung derartiger Code-Generatoren **(13)** ist festzustellen, dass sehr häufigen Änderungen an den Modellen **(2)** sehr seltene Änderungen an den Code-Schablonen **(9)** gegenüberstehen. Der Grund dafür ist, dass Änderungen an den Code-Schablonen **(9)** kompliziert sind, da die Code-Schablonen **(9)** selbst auf komplizierten Template-Sprachen beruhen.

Im Gegensatz dazu erfordern viele Anwendungsfälle eine einfache Anpassbarkeit der Anweisungen an den Code-Generator **(13)**, d.h. der Code-Schablonen **(9)**. Der Grund ist, dass die Modelle **(2)** möglichst wenig Implementationsdetails enthalten sollten, um
1. auch von Experten des jeweiligen Fachgebietes verstanden und bearbeitet werden zu können, nicht nur von Softwareingenieuren,
2. möglichst verschiedene Implementierungen auf unterschiedlichen Implementierungsplattformen zu ermöglichen,
3. in möglichst einfacher und übersichtlicher Form lediglich die fachlichen Zusammenhänge wiederzugeben.

Wenn aber die Implementationsdetails nicht in den Modellen **(2)** festgelegt werden, dann muss das in den Code-Schablonen **(9)** geschehen. Da aber die Implementationsdetails für verschiedene Projekte verschieden sind und sich auch innerhalb eines Projekt häufig ändern könnern, ist die leichte Anpassbarkeit der Code-Schablonen **(9)** Voraussetzung dafür, dass die Modelle **(2)** möglichst wenig Implementationsdetails enthalten.

Der Grund warum Code-Generatoren **(13)** aus Modellen **(2)** nach dem Stand der Technik nur schwer anzupassen sind, liegt darin, dass gemäß dem Stand der Technik alle Anweisungen an den Code-Generator **(13)** programmiert werden müssen. In Code-Generatoren **(13)** aus Modellen **(2)** müssen, ähnlich wie in Compilern, Tabellen und andere Datenstrukturen aufgebaut, verwaltet und abgefragt werden, was komplizierte Programmierungen erfordert. Diese Aufgabe ist umso schwieriger, als dass die Ingenieure, die die Code-Schablonen **(9)** erstellen, gemäß dem Stand der Technik Fachleute in folgenden verschiedenen Gebieten sein müssten:
1. Template-Sprache des jeweiligen Code-Generators **(13)**,
2. Struktur der Modelle **(2)**,
3. Ziel-Sprache und Ziel-Plattform des generierten Codes **(11)**.

Es ist deutlich, dass die Anforderungen an und der Aufwand für die Erstellung aufgabenspezifischer Code-Schablonen **(9)** bei Anwendung des Stands der Technik sehr hoch sind, weshalb diese zumeist unterbleibt.

Eine durch den Stand der Technik nahegelegte Alternative zu komplizierten Template-Sprachen sind vereinfachte Template-Sprachen, die dem Nutzer nicht mehr erlauben vollumfänglich festzulegen, welcher Code **(11)** generiert werden soll, sondern die dem Nutzer nur noch eine mehr oder weniger beschränkte Modifikation einer vorher festgelegten Abbildung des Modells **(2)** auf den Code **(11)** erlauben. Dieser Alternativweg vermeidet das Problem komplizierter Template-Sprachen auf Kosten eingeschränkter Nutzbarkeit der Code-Generierung. Der auf diese Weise generierte Code **(11)** stimmt in der Mehrzahl der Fälle nicht mit dem von Nutzer gewünschten Code überein, weshalb manuelle Nachbearbeitungen in hohem Umfange notwendig sind. Dadurch wird der Aufwand zur Softwareerstellung erhöht, insbesondere aber wird der Aufwand zur Softwarepflege deutlich erhöht, da die Abbildung von Modell **(2)** nach Code **(11)** nicht mehr vollautomatisch durch die Code-Schablonen (9) festgelegt ist, was bei Modelländerungen im Rahmen der Softwarepflege umfangreiche manuelle Nacharbeiten nach erfolgter Code-Generation notwendig macht.

Eine weitere Alternative nach dem Stand der Technik, um die manuellen Nacharbeiten in dieser Situation zu vermeiden, besteht im Roundtrip-Engineering: Zuerst werden Modelle **(2)** erstellt, dann Code **(11)** aus ihnen mit Standard-Schablonen **(9)** generiert, dann dieser Code **(11)** manuell weiterbearbeitet, dann der manuell weiterbearbeitete Code wieder zurück in ein Modell umgewandelt, das nur wieder bearbeitet werden kann. Der grosse Nachteil bei dieser Vorgehensweise ist, dass das aus dem Code regenierte Modell nicht mehr die Einfachheit und Abstraktheit des ursprünglichen fachlichen Modelles **(2)** hat, sondern sämtliche im Rahmen der Code-Bearbeitung getroffenen Implementierungsentscheidungen wiederspiegeln muss. Es ist also im eigentlichen Sinne kein Modell mehr, sondern nur mehr ein anderer Blick auf den Code. Seine Bearbeitung kann nur mehr durch den Software-Ingenieur, aber nicht mehr durch den Fachmann des jeweiligen Fachgebietes geschehen. Der Aufwand zu seiner Bearbeitung ist vergleichbar dem manuellen Programmieren, wenn auch etwas reduziert, da Modelle, insbesondere bei ihrer graphischen Repräsentation in Form von Diagrammen, etwas übersichtlicher sind als bloßer Code.

### 4. Die Erfindung

Die Erfindung besteht in einem Verfahren zur Vereinfachung der Erstellung, Anpassung und Verwendung von Code-Schablonen **(9)** und in einem Gerät und einer Software, die dieses Verfahren realisiert. Die Vereinfachung besteht darin, dass die zusätzlichen, aus dem Modell ableitbaren und vom Code-Generator benötigten Daten **(16,17)** nicht programmatisch in den Code-Schablonen **(9)**, sondern in einer Meta-Modell Erweiterung definiert sind, und dass ein Software- und/oder Hardwarewerkzeug **(4)** gegeben ist, das es erlaubt, auf die berechneten Daten **(16,17)** im durch die Meta-Modell Erweiterung erweiterten Modell **(7)** in gleicher Weise wie auf die ursprünglichen Modelldaten **(15)** zuzugreifen, was es erlaubt, deutlich einfachere Code-Schablonen **(9)** zu erstellen, die nunmehr im wesentlichen nur noch aus dem auszugebenden Code **(26,28)**, aus Zugriffen auf das erweiterte Modell **(23,25,26)**, aus einfachen Berechnungen unter Benutzung sprachinterner und -externer Funktionen und Operatoren und aus bedingten Anweisungen und Schleifen **(22)** bestehen. Die Notwendigkeit, Datenstrukturen in den Code-Schablonen **(9)** durch Modellzugriffe erst aufzubauen fällt weg, da dies bereits in dem erweiterten Modell **(7)** geschieht. Dadurch fällt überhaupt jede Notwendigkeit des Modellzugriffes in den Code-Schablonen **(9)**, die vor der eigentlichen Code-Generation liegt, weg.

Die notwendigen Meta-Modell Erweiterungen bestehen in zusätzlichen Eigenschaften **(16,17)** von Modellelementen und zusätzlichen Beziehungen zwischen Modellelementen. Sowohl die zusätzlichen Eigenschaften **(16,17)** als auch die zusätzlichen Beziehungen müssen aus den ursprünglichen Modelldaten **(15)** bzw. aus anderweitig schon berechneten zusätzlichen Modelldaten berechenbar sein. Zusätzliche Eigenschaften können auch von Parametern abhängen.

Welche Eigenschaften Modellelemente haben können und welche Beziehungen zwischen Modellelementen bestehen können, wird durch die Modellierungssprache, nicht durch das Modell **(2)** festgelegt. Um den Nutzer die Möglichkeit geben zu können, zusätzliche Eigenschaften und Beziehungen zur Modellierungssprache hinzuzufügen, muss diese selbst in Form eines Modells vorliegen. Letzteres wird Meta-Modell **(3)** genannt. Das erfindungsgemäße Verfahren besteht darin, dieses Meta-Modell **(3)** im Hinblick auf die Code-Generierung zu erweitern und den Code-Schablonen **(9)** den Zugriff auf das erweiterte Meta-Modell zu ermöglichen, wobei die Weise, wie die zu berechnenden zusätzlichen Eigenschaften und Beziehungen berechnet werden, bei der Erstellung der Code-Schablonen **(9)** nicht berücksichtigt werden muss.

Für die Erweiterbarkeit des Meta-Modells **(3)** wird ein Meta-Modell Editor **(6)** verwendet, der es erlaubt, dem Meta-Modell **(6)** zusätzliche zu berechnende Eigenschaften **(16,17)** und Beziehungen hinzuzufügen. Idealerweise erlauben die zur Erweiterung des Meta-Modells verwendeten Werkzeuge **(6)** die separate Verwaltung von Meta-Modell Erweiterungen, so dass einmal erstellte Erweiterungen in verschiedenen Projekten und auch unter gleichzeitiger Anwendung verschiedener Meta-Modell Erweiterungen verwendet werden können.

Die Ansprüche 1-2 umfassen das erfindungsgemäße Verfahren in seiner grundsätzlichen Ausbildung. Die Ansprüche 3-8 geben weitere Ausgestaltungen des Verfahrens an, nämlich
- der Anspruch 3 eine Ausgestaltung, bei der generische Werkzeuge verwendet werden, die sich in gleicher Weise auf eine Vielzahl von Meta-Modellen **(3)**, die Instanzen eines gemeinsamen Meta-Meta-Modells sind, beziehen,
- die Anspruch 4 Ausgestaltungen, bei denen ein Editor **(6)** für Meta-Modell Erweiterungen verwendet wird, der den Nutzer in bestimmter, dort angegebener Weise bei der Erstellung von Meta-Modell Erweiterungen unterstützt,
- der Anspruch 5 eine Ausgestaltung, bei der anstelle eines Meta-Modells **(3)** und zusätzlich einer Meta-Modell Erweiterung ein Meta-Modell verwendet wird, das die für die Code-Generierung notwendige Meta-Modell Erweiterung bereits enthält,
- die Ansprüche 6-8 Ausgestaltungen hinsichtlich der Form der Code-Schablonen **(9)**,

Der Anspruch 9 umfasst das erfindungsgemäße softwaregesteuerte Gerät in seiner grundsätzlichen Ausbildung. Der Anspruche 10 gibt eine weitere Ausgestaltungen des Gerätes an, bei denen solche Teile der Funktionalität des softwaregesteuerten Gerätes gemäß Anspruch 10, die nicht erfindungswesentlich sind, durch externe Software übernommen werden.

Der Anspruch 11 umfäßt die erfindungsgemäße Software.

### 5. Gewerbliche Anwendbarkeit

Die gewerbliche Anwendbarkeit des erfindungsgemäßen Verfahrens, des erfindungsgemäßen softwaregesteuerten Gerätes und der erfindungsgemäßen Software besteht in der Verwendbarkeit bei der gewerblichen Herstellung von Software, von softwaregesteuerten Systemen und bei der gewerblichen Steuerung externer Systeme.

### 6. Vorteilhafte Wirkungen der Erfindung

Der Hauptvorteil der Erfindung gegenüber dem Stand der Technik liegt darin, dass die projekt- und aufgabenspezifische Steuerung von Code-Generatoren **(13)** zur Generation von Code **(11)** aus Modellen **(2)** deutlich vereinfacht wird. Das ermöglicht die häufige und projektspezifische Anpassung der Code-Generierung mit folgenden weiteren Vorteilen:
1. In die Modelle **(2)** müssen keine Implementationsdetails aufgenommen werden.
2. Die Modelle **(2)** bleiben für Fachleute des Fachgebietes, für das die zu generierende Software **(11)** erstellt wird, verständlich.
3. Es kann parallel an Modellen **(2)** und Implementierung (Meta-Modell Erweiterungen und Code-Schablonen **(9)**) gearbeitet werden, da beide unabhängig voneinander sind.
4. Die Menge des manuell zu erstellenden Codes wird deutlich reduziert, da spezifischer Code **(11)** generiert wird.
5. Die Anzahl der durch manuelle Programmierung eingebrachten Fehler wird reduziert, die Qualität der Software damit erhöht.

### 7. Ausführungsbeispiel

Ein Ausführungsbeispiel der Erfindung ist nachstehend unter Bezugnahme auf die zugehörigen Zeichnungen näher erläutert. Das Beispiel zeigt eine Software zur Steuerung eines Computers, die zusammen ein softwaregesteuerten Gerätes gemäß den Anspruch 10 bilden, das, gemeinsam mit der nach Anspruch 10 notwendigen externen Komponente **(1)** verwendet, eine Vorrichtung zur Durchführung des Verfahrens gemäß Anspruch 1 darstellt.
**Fig. 1** zeigt die Erstellung von Modellen **(2)** und Meta-Modellen **(3)** unter Verwendung eines externen Case-Tools **(1)**.
**Fig. 2** zeigt die Erstellung und Bearbeitung von Meta-Modell Erweiterungen.
**Fig. 3** zeigt die Generierung des Ziel-Codes **(11)** unter Verwendung von Code-Schablonen **(9)**, wobei hier sowohl die Code-Schablonen **(9)** als auch der Ziel-Code **(11)** in Form von Dateien vorliegen.
**Fig. 4** und **5** zeigen Teile der Benutzerschnittstelle des Editors **(6)** für Meta-Modell Erweiterungen.
**Fig. 6** zeigt Ausschnitte einer Code-Schablone **(6)**.

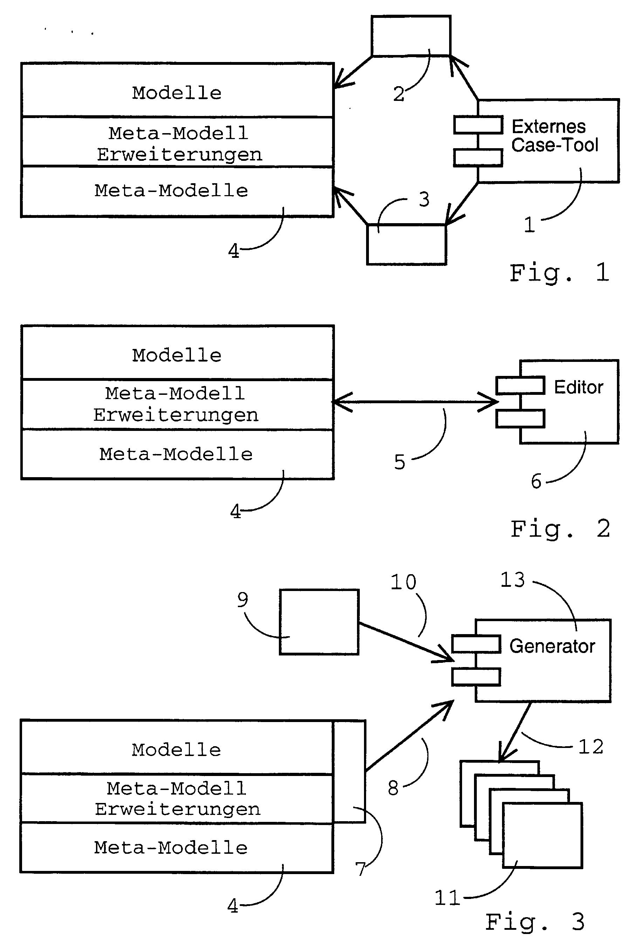

In **Fig. 1** werden mit einem externen Case-Tool **(1)** gemäß dem Stand der Technik Modelle und Meta-Modelle erstellt und in Form von Dateien abgelegt. Die Datei **(2)** enthält ein Modell, die Datei **(3)** ein Meta-Modell. Die erfindungsgemäße Software enthält ein Repository **(4)**, das eine Eingabeschnittstelle hat, über die die Ausgabedateien des Case-Tools **(1)** eingelesen werden können. Das Repository **(4)** ist generisch in Bezug auf ein Meta-Meta-Modell M, kann also alle Modelle von Meta-Modellen des Meta-Meta-Modelles M verwalten. Das Case-Tools **(1)** kann genutzt werden, um Meta-Modelle des Meta-Meta Modells M und Modelle eines bestimmten Meta-Modells U zu erstellen und zu bearbeiten. Im Repository **(4)** werden drei verschiedene Arten von Daten verwaltet: Modelle, Meta-Modelle und Meta-Modell Erweiterungen. Dies wird dadurch ermöglicht, dass die Meta-Modell Erweiterungen Instanzen eines Meta-Modells E des Meta-Meta-Modells M sind und damit aufgrund der Generizität des Repositories von diesem verwaltet werden können.

In **Fig. 2** wird dargestellt, wie ein Editor **(6)** für Meta-Modell Erweiterungen genutzt wird, um im Repository **(4)** Meta-Modell Erweiterungen zu erstellen und dort verwaltete Meta-Modell Erweiterungen zu modifizieren. Der Editor **(6)** greift über eine generische, vom Repository **(4)** angebotene, für alle Modelle (inklusive der Meta-Modelle und Meta-Modell Erweiterungen) in gleicher Weise verfügbar Lese- und Schreibschnittstelle **(5)** auf des Repository und dort verwaltete Meta-Modell Erweiterungen zu.

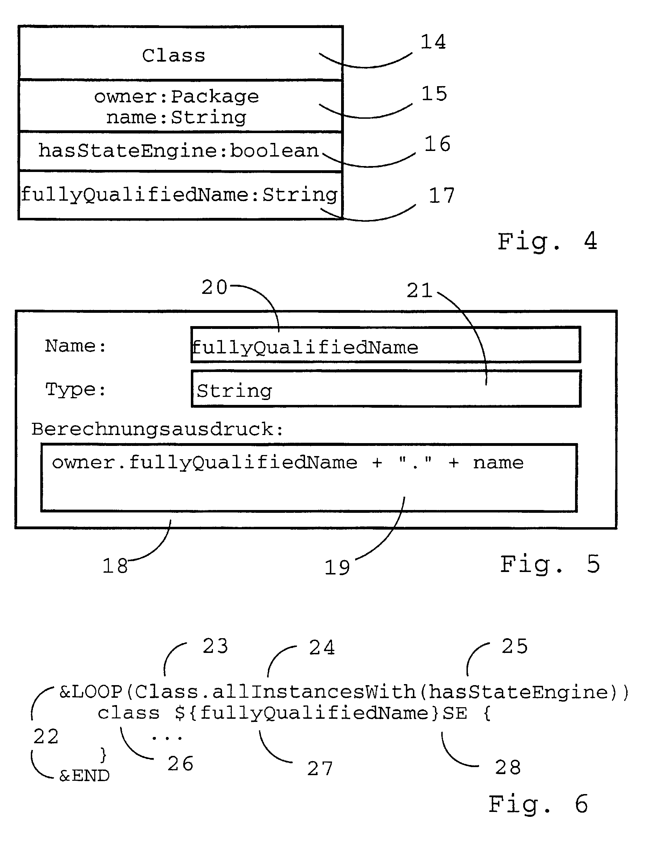

In **Fig. 3** wird dargestellt, wie ein Generator **(13)** unter Verwendung einer in Dateiform vorliegenden Code-Schablone **(9)** aus einem im Repository **(4)** vorliegedem Modell Code enthaltende Dateien **(11)** erzeugt. Die Lesezugriffe **(8)** des Generators **(13)** auf das Modell geschehen über eine zusätzliche, vom Repository angebotene Schnittstelle **(7)** , in der das Modell und eine oder mehrere Meta-Modell Erweiterungen als Einheit in Form eines erweiterten Modelles dargestellt werden. Diese Schnittstelle **(7)** verbirgt die in den Meta-Modell Erweiterungen definierten Berechnungsvorgänge vor dem Generator **(13)**, so dass der Generator auf berechnete, in Meta-Modell Erweiterungen enthaltene Eigenschaften und Beziehungen in gleicher Weise wie auf ursprüngliche Modell-Eigenschaften und Beziehungen zugreifen kann. Der Generator **(13)** liest die Code-Schablone **(9)** über einen Eingabekanal **(10)** und interpretiert den Inhalt der Code-Schablone **(9)**. In der Code-Schablone **(9)** enthaltene Bezüge auf das erweiterte Modell werden über die Schnittstelle **(7)** aufgelöst und gemäß den Anweisungen in der Code-Schablone in Code umgesetzt, der in eine oder mehrere Dateien **(11)** über einen Ausgabekanal **(12)** geschrieben wird.

In **Fig. 4** wird gezeigt, wie ein Modellelement des Meta-Modells zusammen mit seinen Erweiterungen dem Nutzer vom Editor für Meta-Modell Erweiterungen dargestellt wird. Es handelt sich hierbei um ein Meta-Modell mit zwei Erweiterungen, von denen eine gerade bearbeitet wird. Das Meta-Modell enthält ein Modell-Element mit dem Namen 'Class'. Dieses hat im Meta-Model zwei Eigenschaften namens 'owner' und 'name', in der momentan nicht bearbeiteten Erweiterung eine zusätzliche Eigenschaft 'hasStateEngine' und in der momentan bearbeiteten Erweiterung eine weitere Eigenschaft 'fullyQualifiedName'. Das Meta-Modell-Element wird dem Nutzer in Form eines Rechtecks mit vier Abteilungen **(14,15,16,17)** dargestellt. Abteilung **(14)** zeigt den Name des Meta-Modell-Elements an, Abteilung **(15)** die im Meta-Modell definierten Eigenschaften mit Name und Type, Abteilung **(16)** die in der momentan nicht bearbeiteten Erweiterung definierten Eigenschaften und Abteilung **(17)** die in der momentan bearbeiteten Erweiterung definierten Eigenschaften. Die Inhalte der Abteilungen **(14,15,16)** werden dem Nutzer in grauer Farbe angezeigt zum Zeichen, dass sie nicht Teil der momentan bearbeiteten Erweiterung sind. Der Inhalt der Abteilung **(17)** wird dem Nutzer in schwarzer Farbe angezeigt zum Zeichen, dass er bearbeitet werden kann.

In **Fig. 5** wird gezeigt, wie der Inhalt von Abteilung **(17)** aus **Fig. 4** in dem Editor für Meta-Modell Erweiterungen bearbeitet werden kann. Die Anzeige geschieht in einem Fenster **(18)** mit drei Eingabefeldern **(19,20,21)**. Das Eingabefeld **(19)** dient zur Eingabe des Berechnungsausdruck, der ausgewertet werden muss, wenn der Wert der neuen Eigenschaften in einem Modell berechnet werden soll. Eingabefeld **(20)** dient zur Eingabe des Namens und Eingabefeld **(21)** zur Eingabe des Types der neuen Eigenschaft.

In **Fig. 6** wird der Inhalt einer Code-Schablone **(9)**, die von dem Generator **(13)** eingelesen und als Grundlage der Code-Generation genommen wird, ausschnittsweise gezeigt. **(22)** stellt eine Schleife über eine Menge von Modellelementen dar. Die Menge, über die zu iterieren ist, wird durch **(23,24,25)** definiert, wobei **(23)** eine Ausgangsmenge, nämlich die Menge aller Instanzen des Meta-Modell-Elements 'Class' festlegt und **(25)** eine Bedingung darstellt. **(26,27,28)** und weitere, in **Fig. 6** nicht dargestellte Teile der Code-Schablone **(9)** legen den Ausgabe-Code für jedes Element der Menge, über die zu iterieren ist, fest. **(26,28)** sind feste auszugebende Code-Fragmente, während **(27)** den Code-Generator **(13)** veranlasst, einen durch die Meta-Modell Erweiterung hinzugefügten berechneten Wert einzufügen.

Das Ausführungsbeispiel für das Verfahren gemäß Anspruch 1 besteht in der Verwendung des durch die vorgestellte Software gesteuerten Gerätes in folgenden Schritten:
1. Bei der ersten Nutzung der Software wird das Meta-Modell **(3)** in das Repository **(4)** eingelesen.
2. Für Softwareprojekte mit Hilfe des Case-Tools **(1)** erstellte Modelle **(2)** werden in das Repository eingelesen.
3. Wenn nötig werden mit dem Editor **(6)** auf die in **Fig. 5** und **6** dargestellte Weise eine neue Meta-Modell Erweiterung erstellt oder vorhandene Meta-Modell Erweiterungen modifziert.
4. Wenn nötig werden projektspezifische Code-Schablonen **(9)** erstellt, ansonsten werden vorhandene Code-Schablonen **(9)** herangezogen.
5. Der Generator **(13)** wird verwendet um unter Zugriff auf die Code-Schablone **(9)** und das durch wiederverwendete oder projektspezifische Meta-Modell Erweiterungen erweiterte Modell über die Schnittstelle **(7)** Code in Ausgabedateien **(11)** zu generieren.
6. Bei Änderungen der inhaltlichen Anforderungen an die generierte Software wird das Modell **(2)** mit Hilfe des Case-Tools **(1)** geändert, das geänderte Modell wieder in das Repository **(4)** eingelesen und die Code-Generierung wiederholt.
7. Bei Änderungen hinsichtlich der Anforderungen an die Implementierung der generierten Software werden die Meta-Modell Erweiterungen mit Hilfe des Editors **(6)** und die Code-Schablonen **(9)** entsprechend angepasst und die Code-Generierung wiederholt.

## Patentansprüche

1. Verfahren zur Erzeugung von Software für ein softwaregesteuertes Gerät ausgehend von einem in einer Maschine, zum Beispiel in Form von Daten in einem Computer, realisierten Modell **(2)** der Software, bei dem der Programmcode **(11)** der Software automatisch von dem Modell **(2)** abgeleitet wird, **dadurch gekennzeichnet, dass** das Modell **(2)** eine Instanz eines Meta-Modells **(3)** ist und für letzteres eine Erweiterung erstellt wird, die es erlaubt, weitere Daten **(17)** aus dem Modell automatisch abzuleiten, und für das erweiterte Modell Code-Schablonen **(9)** erstellt werden, in denen feste Teile **(26,28)** des zu generierenden Codes zusammen mit Anweisungsfolgen **(22,23,24,25,27)** zur Generierung von modellabhängigen Codeabschnitten enthalten sind.

2. Verfahren nach Anspruch 1, **dadurch gekennzeichnet, dass** nicht eine Meta-Modell Erweiterung verwendet wird, sondern mehrere, die jeweils verschiedene automatisch ableitbare Daten **(16,17)** dem Modell **(2)** hinzufügen.

3. Verfahren nach Anspruch 1, **dadurch gekennzeichnet, dass** das Meta-Modell **(3)** Instanz eines Meta-Meta-Modells ist und die für die Realisierung des Verfahrens verwendeten, in Software und Hardware oder Hardware alleine implementierten Werkzeuge **(1,4,6,13)** sich in gleicher Weise auf alle Modelle **(2)** von Meta-Modellen **(3)** des gegebenen Meta-Meta-Modells anwenden lassen.

4. Verfahren nach Anspruch 1, **dadurch gekennzeichnet, dass** für die Erstellung der Erweiterung des Meta-Modells **(3)** ein in Software und Hardware oder Hardware alleine realisierter Editor **(6)** verwendet wird, der dem Nutzer das Meta-Model **(3)** in graphischer oder struktureller Form anzeigt und dem Nutzer erlaubt, das Meta-Modell durch Hinzufügen von Modelleigenschaften **(17)** und Modellbeziehungen zu erweitern, wobei der Editor alle oder einen Teil der folgenden zusätzliche Eigenschaften hat:
a) Zusätzlich zu den Eigenschaften **(15)** und Beziehungen des Meta-Modells werden auch die Erweiterungen des Meta-Modells dem User präsentiert.
b) Zu jeder durch die Erweiterung zum Meta-Modell hinzukommende Modelleigenschaft **(17)** und Modellbeziehung kann vom Nutzer eine Berechnungsvorschrift **(19)** angegeben werden, die festlegt, wie sich der Wert der Modelleigenschaft oder die durch die Modellbeziehung in Beziehung gesetzten Modellelemente aus vom Nutzer beim Modellieren anzugebenden **(15)** oder anderen berechneten **(16)** Modelleigenschaften und Modellbeziehungen berechnen.
c) Einmal hinzugefügte Modelleigenschaften und Modellbeziehungen können vom Nutzer auch im Nachhinein modifiziert werden.
d) Einmal hinzugefügte Modelleigenschaften und Modellbeziehungen können vom Nutzer auch wieder entfernt werden.
e) Teile **(14,15)** des Meta-Modells **(3)**, die auch vor seiner Erweiterung Bestand hatten, können vom Nutzer weder modifiziert noch gelöscht werden.
f) Die Meta-Modell Erweiterung kann unabhängig von dem Meta-Modell **(3)** gespeichert **(5)** und auch wieder geladen **(5)** werden.
g) Der Editor **(6)** kann prüfen, ob eine gegebene Meta-Modell-Erweiterung auf ein gegebenes Meta-Modell **(3)** angewandt werden kann, diese also miteinander kompatibel sind oder nicht.

5. Verfahren nach Anspruch 1, **dadurch gekennzeichnet, dass** die Erweiterung des Meta-Modells **(3)** bereits Teil des Meta-Modells **(3)** selbst ist, dass also das Meta-Modell **(3)** zusätzlich zu den bei der Modellerstellung anzugebenden Modelleigenschaften **(15)** und Modellbeziehungen abgeleitete (berechnete) Modelleigenschaften **(16,17)** und Modellbeziehungen vorsieht, die für die Codegenerierung **(12)** mit Hilfe von Code-Schablonen **(9)** verwendet werden.

6. Verfahren nach Anspruch 1, **dadurch gekennzeichnet, dass** die Code-Schablonen **(11)** in Form von Dateien gegeben sind, die sowohl feste Teile **(26,28)** des zu generierenden Codes als auch Anweisungsfolgen **(22,23,24,25,27)** in einer speziellen Template-Sprache enthalten, wobei die Anweisungsfolgen festlegen, wie modellabhängige Codeteile aus dem Modell abgeleitet werden.

7. Verfahren nach Anspruch 1, **dadurch gekennzeichnet, dass** in den Code-Schablonen **(9)** eine spezielle Template-Sprache verwendet wird,
a) die es erlaubt durch im erweiterten Modell enthaltene Mengen **(23)** und Listen von Modellelementen zu iterieren **(22)**,
b) die es erlaubt, Eigenschaften **(15,16,17)** von Modellelementen zu referenzieren **(25,27)**,
c) die sprachinterne Funktionen und Operationen hat, mit denen Ausdrücke gebildet werden können, die es erlauben, aus gegebenen Modelldaten neue zu berechnen,
d) die es erlaubt, externe Bibliotheken von Funktionen und Operationen zu verwenden, so dass mit diesen Funktionen und Operationen ebenfalls Ausdrücke zur Berechnung neuer Daten gebildet werden können,
e) die bedingte Anweisungen erlaubt,
f) deren Ausführung keine Änderungen im Modell hervorruft.

8. Verfahren nach Anspruch 1, **dadurch gekennzeichnet, dass** die Code-Schablonen **(9)** den zu generierenden Code **(11)** nicht vollständig festlegen, sondern Code-Bereiche festlegen, in denen der Nutzer nach erfolgter Code-Generierung **(12)** manuell Ergänzungen vornehmen kann, so dass bei erneuerter Generierung **(12)** des Code-Teiles die manuellen Hinzufügungen nicht überschrieben werden, sondern in den neu generiereten Code **(11)** übernommen werden.

9. Softwaregesteuertes Gerät zur Realisierung des unter 1. genannten Verfahrens, **dadurch gekennzeichnet, dass** eine Komponente **(1)** zur Erstellung von Modellen **(2)**, eine Komponente **(6)** zur Erweiterung von Meta-Modellen **(3)** mit aus Modelldaten **(15)** berechenbaren Daten **(16,17)** und eine Komponente zur Erstellung, Bearbeitung und Anwendung von Code-Schablonen **(9)** derart zusammenarbeiten, dass die Anwendung einer Meta-Modell Erweiterung auf ein Modell **(2)** ein mit berechneten Daten **(16,17)** erweitertes Modell **(7)** ergibt, auf das bei der Anwendung der Code-Schablonen **(9)** zur Code-Generierung zum Zwecke der Ausgabe von Modelldaten **(15)** oder aus dem Modell berechneten Daten **(16,17)** zugegriffen werden kann.

10. Softwaregesteuertes Gerät nach Anspruch 9, **dadurch gekennzeichnet, dass** die Komponente **(1)** zur Erstellung und Bearbeitung von Modellen **(2)** nicht Teil des Gerätes ist, sondern die Modelle **(2)** außerhalb des Gerätes erstellt werden und über eine Importschnittstelle eingelesen werden.

11. Software zu Realisierung des unter 1 genannten Verfahrens auf einem Computer, **dadurch gekennzeichnet, dass** durch Installation der Software auf einem Computer ein Gerät nach zumindest einem der Ansprüche 10 und 11 entsteht.

## Geänderte Patentansprüche

### Geänderte Patentansprüche gemäss Regel 86(2) EPÜ.

**1.** Verfahren zur Erzeugung von Software für ein softwaregesteuertes Gerät ausgehend von einem in einer Maschine, zum Beispiel in Form von Daten in einem Computer, realisierten Modell **(2)** der Software, bei dem der Programmcode **(11)** der Software automatisch von dem Modell **(2)** abgeleitet wird, **dadurch gekennzeichnet, dass** das Modell **(2)** eine Instanz eines Meta-Modells **(3)** ist und für letzteres eine Erweiterung erstellt wird, die darin besteht, dass dem Meta-Modell Berechnungsvorschriften hinzugefügt werden, die es erlauben, weitere Daten **(17)** aus dem Modell automatisch abzuleiten, und für das erweiterte Modell Code-Schablonen **(9)** erstellt werden, in denen feste Teile **(26,28)** des zu generierenden Codes zusammen mit Anweisungsfolgen **(22,23,24,25,27)** zur Generierung von modellabhängigen Codeabschnitten enthalten sind.

**2.** Verfahren nach Anspruch 1, **dadurch gekennzeichnet, dass** nicht eine Meta-Modell Erweiterung verwendet wird, sondern mehrere, die jeweils verschiedene automatisch ableitbare Daten **(16,17)** dem Modell **(2)** hinzurügen.

**3.** Verfahren nach Anspruch 1, **dadurch gekennzeichnet, dass** das Meta-Modell **(3)** Instanz eines Meta-Meta-Modells ist und die für die Realisierung des Verfahrens verwendeten, in Software und Hardware oder Hardware alleine implementierten Werkzeuge **(1,4,6,13)** sich in gleicher Weise auf alle Modelle **(2)** von Meta-Modellen **(3)** des gegebenen Meta-Meta-Modells anwenden lassen.

**4.** Verfahren nach Anspruch 1, **dadurch gekennzeichnet, dass** für die Erstellung der Erweiterung des Meta-Modells **(3)** ein in Software und Hardware oder Hardware alleine realisierter Editor **(6)** verwendet wird, der dem Nutzer das Meta-Model **(3)** in graphischer oder struktureller Form anzeigt und dem Nutzer erlaubt, das Meta-Modell durch Hinzufügen von Modelleigenschaften **(17)** und Modellbeziehungen zu erweitern, wobei der Editor alle oder einen Teil der folgenden zusätzliche Eigenschaften hat:
a) Zusätzlich zu den Eigenschaften **(15)** und Beziehungen des Meta-Modells werden auch die Erweiterungen des Meta-Modells dem User präsentiert.
b) Zu jeder durch die Erweiterung zum Meta-Modell hinzukommende Modelleigenschaft **(17)** und Modellbeziehung kann vom Nutzer eine Berechnungsvorschrift **(19)** angegeben werden, die festlegt, wie sich der Wert der Modelleigenschaft oder die durch die Modellbeziehung in Beziehung gesetzten Modellelemente aus vom Nutzer beim Modellieren anzugebenden **(15)** oder anderen berechneten **(16)** Modelleigenschaften und Modellbeziehungen berechnen.
c) Einmal hinzugefügte Modelleigenschaften und Modellbeziehungen können vom Nutzer auch im Nachhinein modifiziert werden.
d) Einmal hinzugefügte Modelleigenschaften und Modellbeziehungen können vom Nutzer auch wieder entfernt werden.
e) Teile **(14,15)** des Meta-Modells **(3)**, die auch vor seiner Erweiterung Bestand hatten, können vom Nutzer weder modifiziert noch gelöscht werden.
f) Die Meta-Modell Erweiterung kann unabhängig von dem Meta-Modell **(3)** gespeichert **(5)** und auch wieder geladen **(5)** werden.
g) Der Editor **(6)** kann prüfen, ob eine gegebene Meta-Modell-Erweiterung auf ein gegebenes Meta-Modell **(3)** angewandt werden kann, diese also miteinander kompatibel sind oder nicht.

**5.** Verfahren nach Anspruch 1, **dadurch gekennzeichnet, dass** die Erweiterung des Meta-Modells **(3)** bereits Teil des Meta-Modells **(3)** selbst ist, dass also das Meta-Modell **(3)** zusätzlich zu den bei der Modellerstellung anzugebenden Modelleigenschaften **(15)** und Modellbeziehungen abgeleitete (berechnete) Modelleigenschaften **(16,17)** und Modellbeziehungen vorsieht, die für die Codegenerierung **(12)** mit Hilfe von Code-Schablonen **(9)** verwendet werden.

**6.** Verfahren nach Anspruch 1, **dadurch gekennzeichnet, dass** die Code-Schablonen **(11)** in Form von Dateien gegeben sind, die sowohl feste Teile **(26,28)** des zu generierenden Codes als auch Anweisungsfolgen **(22,23,24,25,27)** in einer speziellen Template-Sprache enthalten, wobei die Anweisungsfolgen festlegen, wie modellabhängige Codeteile aus dem Modell abgeleitet werden.

**7.** Verfahren nach Anspruch 1, **dadurch gekennzeichnet, dass** in den Code-Schablonen **(9)** eine spezielle Template-Sprache verwendet wird,
a) die es erlaubt durch im erweiterten Modell enthaltene Mengen **(23)** und Listen von Modellelementen zu iterieren **(22)**,
b) die es erlaubt, Eigenschaften **(15,16,17)** von Modellelementen zu referenzieren **(25,27)**,
c) die sprachinterne Funktionen und Operationen hat, mit denen Ausdrücke gebildet werden können, die es erlauben, aus gegebenen Modelldaten neue zu berechnen,
d) die es erlaubt, externe Bibliotheken von Funktionen und Operationen zu verwenden, so dass mit diesen Funktionen und Operationen ebenfalls Ausdrücke zur Berechnung neuer Daten gebildet werden können,
e) die bedingte Anweisungen erlaubt,
f) deren Ausführung keine Änderungen im Modell hervorruft.

**8.** Verfahren nach Anspruch 1, **dadurch gekennzeichnet, dass** die Code-Schablonen **(9)** den zu generierenden Code **(11)** nicht vollständig festlegen, sondern Code-Bereiche festlegen, in denen der Nutzer nach erfolgter Code-Generierung **(12)** manuell Ergänzungen vornehmen kann, so dass bei erneuerter Generierung **(12)** des Code-Teiles die manuellen Hinzufügungen nicht überschrieben werden, sondern in den neu generiereten Code **(11)** übernommen werden.

**9.** Softwaregesteuertes Gerät zur Realisierung des unter 1. genannten Verfahrens, **dadurch gekennzeichnet, dass** eine Komponente **(1)** zur Erstellung von Modellen **(2)**, eine Komponente **(6)** zur Erweiterung von Meta-Modellen **(3)** mit aus Modelldaten **(15)** berechenbaren Daten **(16,17)** und eine Komponente zur Erstellung, Bearbeitung und Anwendung von Code-Schablonen **(9)** derart zusammenarbeiten, dass die Anwendung einer Meta-Modell Erweiterung auf ein Modell **(2)** ein mit berechneten Daten **(16,17)** erweitertes Modell **(7)** ergibt, auf das bei der Anwendung der Code-Schablonen **(9)** zur Code-Generierung zum Zwecke der Ausgabe von Modelldaten **(15)** oder aus dem Modell berechneten Daten **(16,17)** zugegriffen werden kann.

**10.** Softwaregesteuertes Gerät nach Anspruch 9, **dadurch gekennzeichnet, dass** die Komponente **(1)** zur Erstellung und Bearbeitung von Modellen **(2)** nicht Teil des Gerätes ist, sondern die Modelle **(2)** außerhalb des Gerätes erstellt werden und über eine Importschnittstelle eingelesen werden.

**11.** Software zu Realisierung des unter 1 genannten Verfahrens auf einem Computer, **dadurch gekennzeichnet, dass** durch Installation der Software auf einem Computer ein Gerät nach zumindest einem der Ansprüche 10 und 11 entsteht.
